# EUROPEAN PATENT APPLICATION

(11) **EP 3 511 637 A1**
(43) Date of publication of application: **17.07.2019**
(21) Application number: 19151249.0
(22) Date of filing: 10.01.2019
(51) Int. Cl.: F24F 5/00, F24F 11/46, H02J 3/38, H02P 27/06

(54) **POWER-SOURCE-SYSTEM-INTEGRATING AIR-CONDITIONING DEVICE**

(30) Priority: 12.01.2018 JP 2018003357
(71) Applicant: MITSUBISHI HEAVY INDUSTRIES THERMAL SYSTEMS, LTD., 108-8215 Tokyo (JP)
(72) Inventor: Masutani, Akihiro, Tokyo, 108-8215 (JP); Hayashi, Shigeki, Tokyo, 108-8215 (JP)
(74) Representative: Henkel, Breuer & Partner

(57) **Abstract**

Provided is a power-source-system-integrating air-conditioning device allowing a user to freely use electricity generated by a solar panel without using a power conditioner. The power-source-system-integrating air-conditioning device (1) includes an air-conditioning device, which includes a refrigeration cycle configured by interconnecting a compressor (22), an evaporator, an expansion valve and a condenser and an inverter driving the compressor (22); an outlet (3); a solar panel (2) supplying a direct current to the inverter; a switching unit, to which an alternating current obtained by conversion by the inverter is input, configured to supply the alternating current to either of the compressor (22) and the outlet (3); and a switching control unit controlling the switching unit to supply the alternating current to the outlet (3) when the compressor (22) is stopped.

## Description

### [Technical Field]

The present invention relates to a power-source-system-integrating air-conditioning device.

### [Background Art]

A solar power generation system installed for household use generally includes a solar panel and a power conditioner. Since a voltage generated by a solar panel is a direct-current voltage, the power conditioner converts the voltage into an alternating-current voltage (e.g., 100 V at 50 Hz) to make it suitable for household use. However, since the power conditioner is a very costly piece of equipment, a user needs to bear a significant burden when he/she introduces it.

PTL 1 discloses an air-conditioning device constituted by an indoor unit and an outdoor unit and which inputs either of the electrical power generated by a smoothed commercial power source or that generated by a solar panel to an inverter device driving a compressor provided in the outdoor unit so as to enable the compressor to be driven by the solar panel as well for achieving energy conservation.

### [Citation List]

### [Patent Literature]

[PTL 1] Japanese Unexamined Patent Application, Publication No. 2005-156072

### [Summary of Invention]

### [Technical Problem]

However, according to the scheme disclosed in PTL 1, the electricity generated by the solar panel is only supplied to the compressor of the air-conditioning device. As a result, it is not possible for a user to freely use the electricity generated by the solar panel, even when the compressor is not used.

The present invention has been made in view of such a circumstance and an object of the present invention is to provide a power-source-system-integrating air-conditioning device allowing a user to freely use the electricity generated by a solar panel without using a power conditioner.

### [Solution to Problem]

A first aspect of the present invention is directed to a power-source-system-integrating air-conditioning device including an air-conditioning device, which includes a refrigeration cycle configured by interconnecting a compressor, an evaporator, an expansion valve, and a condenser, and an inverter configured to drive the compressor; an outlet; a solar panel configured to supply a direct current to the inverter; a switching unit, to which an alternating current obtained by conversion by the inverter is input, configured to supply the alternating current to either of the compressor and the outlet; and a switching control unit configured to control the switching unit such that the switching unit supplies the alternating current to the outlet when the compressor is stopped.

According to the above-described features, the direct current generated by the solar panel can be converted into an alternating current via an inverter included in the air-conditioning device and the alternating current can be supplied to the outlet. As a result, the direct current generated by the solar panel can be converted into an alternating current without the need of using a very costly device, for example, a power conditioner. Since the electrical power can be obtained via the outlet at any time as long as the solar panel can generate electrical power, it can be used as emergency power source, for example, at the time of disaster, etc.

The above-described power-source-system-integrating air-conditioning device may further include an inverter control unit configured to change a frequency and an effective value of an alternating-current voltage output from the inverter such that the frequency and the effective value are changed in accordance with a state of switching of the switching unit.

According to the above-described features, since an appropriate alternating current can be output from the inverter in accordance with the state of switching of the switching unit, the devices connected to the compressor or the outlet can be more reliably protected.

In the above-described power-source-system-integrating air-conditioning device, the air-conditioning device may include an indoor unit and an outdoor unit such that the solar panel is provided on at least either of an upper surface and a side surface of the outdoor unit.

According to the above-described features, since the solar panel is provided on the outdoor unit, it is made possible to carry out operations associated with installation of the solar panel, for example, at the stage of production of the outdoor unit. As a result, the production and installation of the device as a whole can be made simple. Since the cabling distance from the solar panel to the inverter can be shortened, the loss in the electrical power can be suppressed.

### [Advantageous Effects of Invention]

As an effect of the present invention, a user can freely use the electricity generated by a solar panel without the need of using a power conditioner.

### [Brief Description of Drawings]

Fig. 1 is a diagram illustrating a schematic configuration of a power-source-system-integrating air-conditioning device according to an embodiment of the present invention.
Fig. 2 is a diagram illustrating a schematic configuration of a refrigeration cycle in the power-source-system-integrating air-conditioning device according to the embodiment of the present invention.
Fig. 3 is a diagram illustrating a schematic configuration of an electrical power supply system in the power-source-system-integrating air-conditioning device according to the embodiment of the present invention.
Fig. 4 is a functional block diagram illustrating functions of a control device in the power-source-system-integrating air-conditioning device according to the embodiment of the present invention.
Fig. 5 is a diagram illustrating an electrical power supply flow by the power-source-system-integrating air-conditioning device according to the embodiment of the present invention.
Fig. 6 is a diagram illustrating an electrical power supply flow by the power-source-system-integrating air-conditioning device according to the embodiment of the present invention.
Fig. 7 is a diagram illustrating a flowchart of mode determination by the power-source-system-integrating air-conditioning device according to the embodiment of the present invention.

### [Description of Embodiments]

An embodiment of a power-source-system-integrating air-conditioning device according to the present invention will be described hereinbelow with reference to the drawings.

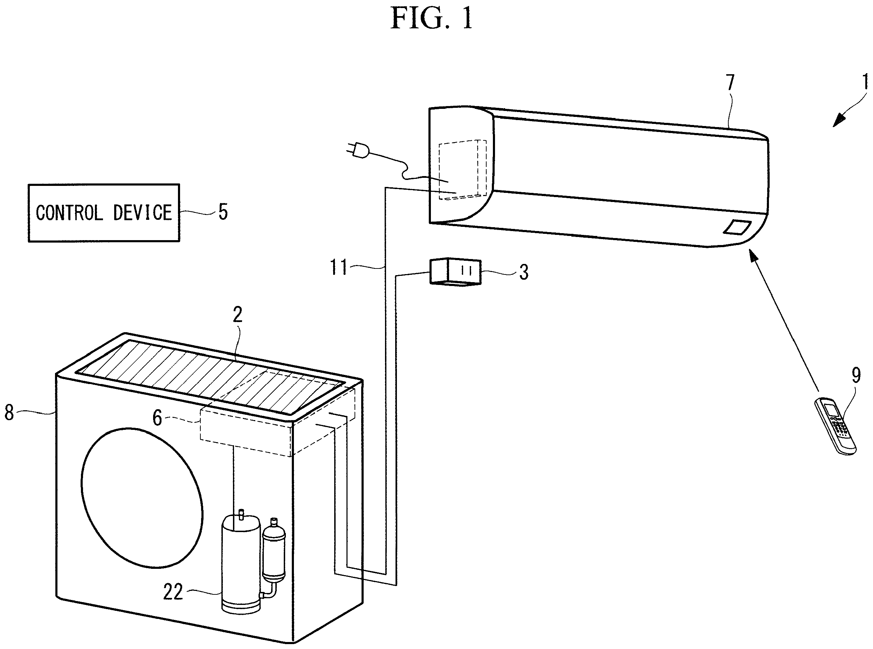

Fig. 1 is a diagram that illustrates a schematic configuration of a power-source-system-integrating air-conditioning device 1 according to an embodiment of the present invention. As illustrated in Fig. 1, the power-source-system-integrating air-conditioning device 1 according to this embodiment includes an air-conditioning device (which includes an indoor unit 7 and an outdoor unit 8), a solar panel 2, an outlet 3, and a control device 5 as its main components. The power-source-system-integrating air-conditioning device 1 further includes an electrical power supply system 6. It is contemplated here that a user is allowed to control operation and/or stoppage of the air-conditioning device using a remote controller 9. The air-conditioning device according to this embodiment will be described by way of an example where it includes an indoor unit 7 and an outdoor unit 8 which may be installed in a house, etc. Meanwhile, the air-conditioning device can also be implemented in the same or similar manner as an air-conditioning device for professional use or other business purposes or may also be implemented as an air-conditioning device that integrates the indoor unit 7 and the outdoor unit 8 with each other. While this embodiment describes, as an example, a situation where the air-conditioning device is operated for cooling air conditioning, the device can also be implemented in the same or similar manner in a situation where it is operated for warming air conditioning.

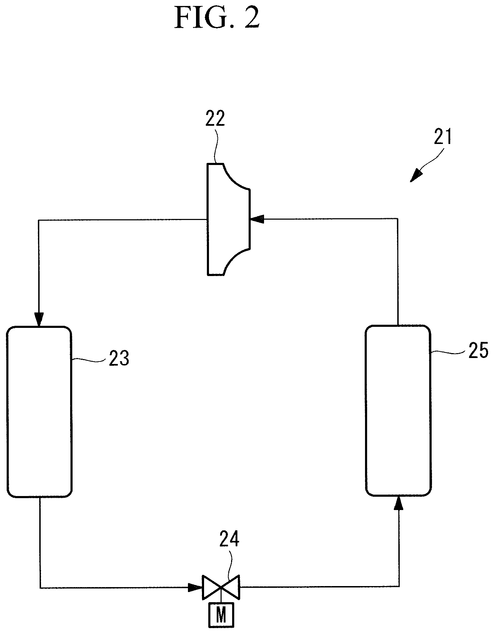

The air-conditioning device includes a refrigeration cycle 21 in which a compressor 22, a condenser 23, an expansion valve 24, and an evaporator 25 are interconnected; and a converter 31 and an inverter 32 driving the compressor 22. Figure 2 illustrates an example of the refrigeration cycle 21. The refrigeration cycle 21 is filled with a refrigerant. The refrigeration cycle 21 is capable of transferring thermal energy by controlled compression and expansion of the refrigerant. Specifically, the refrigerant is placed in a state of high temperature and high pressure when compressed by the compressor 22 and supplied to the condenser 23. The refrigerant is then condensed at the condenser 23 where heat is transferred from the refrigerant to outside air. The condensed refrigerant is then expanded by the expansion valve 24 and supplied to the evaporator 25. The refrigerant is then evaporated at the evaporator 25 where heat is transferred from the outside air to the refrigerant. Further, the evaporated refrigerant is supplied to the compressor 22 and thus the above-described cycle is repeated. In other words, in the refrigeration cycle 21, the thermal energy of the outside air on the side of the evaporator 25 is transferred to the outside air on the side of the condenser 23. It is contemplated in this embodiment that the air-conditioning device includes the indoor unit 7 and the outdoor unit 8, where the indoor unit 7 includes the evaporator 25 while the outdoor unit 8 includes the compressor 22, the expansion valve 24, and the condenser 23. In other words, in accordance with the air-conditioning device according to this embodiment, the thermal energy of the air in a room is transferred by the indoor unit 7 provided inside the room to the refrigerant flowing in the refrigeration cycle 21, and the thermal energy is transferred by the outdoor unit 8 provided outside the room from the refrigerant to the outside air. As a result, the air inside the room can be cooled (by cooling operation).

The solar panel 2 (solar cell panel) is configured to convert energy from sunlight into electrical energy using photoelectric effect and supplies the direct current that has been generated to the inverter 32 of the electrical power supply system 6 which will be described later. Specifically, the direct current that has been generated is supplied via a boosting unit 33 to the inverter 32. The solar panel 2 is provided on at least either of an upper surface and a side surface of the outdoor unit 8. It is assumed in this embodiment that the solar panel 2 is provided on the upper surface of the outdoor unit 8. While production and installation can be made simple by providing the solar panel 2 on at least either of the upper surface and the side surface of the outdoor unit 8, the solar panel 2 and the outdoor unit 8 may be individually arranged.

The outlet 3 is provided in an accompanying manner, for example, in the indoor unit 7 to allow a user to freely use the electricity generated by the solar panel 2. Specifically, the electricity generated by the solar panel 2 is supplied to the outlet 3 while the air-conditioning device is stopped (the compressor 22 is stopped). As a result, the user can freely use the electricity generated by the solar panel 2 via the outlet 3 when the air-conditioning device is not used. Cases where the air-conditioning device is not used include not only a case where the user intentionally leaves the air-conditioning device in an unused state but also cases where the air-conditioning device cannot be used due to a blackout, etc.

Since the same alternating-current voltage (100 V, 50 Hz) as that of a commercial power source is supplied from the inverter 32 to the outlet 3, the user can freely use electricity from the outlet 3. The location of arrangement of the outlet 3 may be defined as appropriate according to the design requirements. For example, the outlet 3 may be provided on the side of the outdoor unit 8. However, if the outlet 3 is provided in an accompanying manner in the indoor unit 7, the cabling from the electrical power supply system 6 to the outlet 3 can be implemented on the same installation route as an electrical path 11 (the electrical path between the indoor unit 7 and the outdoor unit 8 to supply the electrical power from the commercial power source), so that it is made possible to achieve facilitated construction and the like.

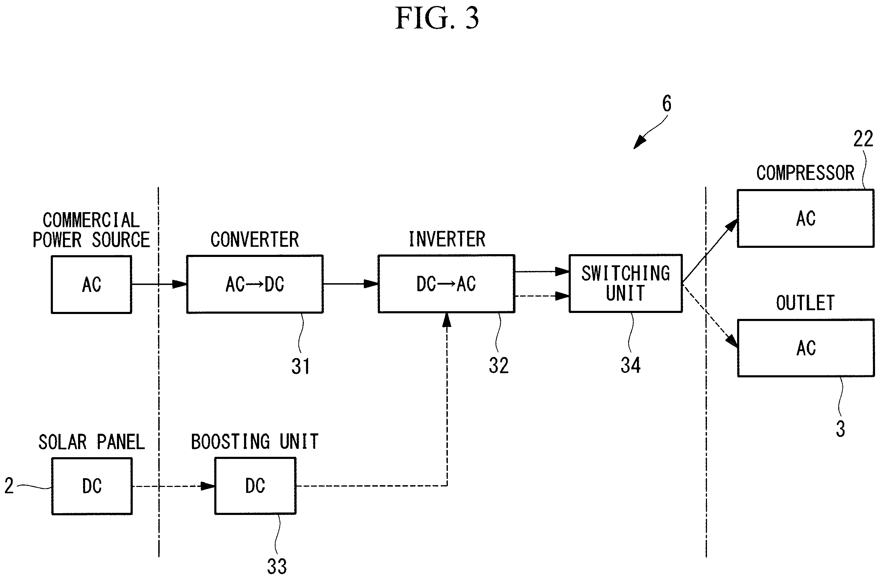

The electrical power supply system 6 refers to a system of electrical paths for supplying electrical power to the compressor 22 and the outlet 3. Fig. 3 is a diagram that illustrates the schematic configuration of the electrical power supply system 6 according to this embodiment. As illustrated in Fig. 3, the electrical power supply system 6 includes a converter 31, the inverter 32, a boosting unit 33, and a switching unit 34. By the electrical power from the commercial power source and the solar panel 2 which are the supply side of the electrical power can be appropriately supplied to the compressor 22 and the outlet 3 which are the demand side of the electrical power by controlling the electrical power supply system 6 by the control device 5. It is assumed in this embodiment that the electrical power supply system 6 is provided in the outdoor unit 8.

The converter 31 is configured to convert the alternating current obtained from the commercial power source into a direct current. In this embodiment, as illustrated in Fig. 1, a plug provided in the indoor unit 7 is connected to the commercial power source and thereby the alternating current is supplied via the electrical path 11 to the converter 31. If the alternating-current voltage obtained from the commercial power source is, for example, given as 100 V (effective value) at 50 Hz (frequency), then the converter 31 converts the obtained alternating-current voltage into a 280-V direct-current voltage. The direct-current voltage that has been converted is supplied to the inverter 32.

The inverter 32, to which the direct-current voltage that has been output from the converter 31 and the direct-current voltage that has been raised by the boosting unit 33 are supplied, is configured to convert them into an alternating-current voltage of a desired voltage value and a desired frequency to output it to the switching unit 34. The inverter 32 is controlled by the inverter control unit 42 which will be described later, and configured to change the effective value and the frequency of the to-be-converted alternating-current voltage in accordance with the destination of the output of the alternating-current voltage (the compressor 22 or the outlet 3). The effective value and the frequency of the alternating-current voltage are predefined in accordance with the specifications of the destination of output of the alternating-current voltage (the compressor 22 or the outlet 3) .

In this embodiment, both of the direct-current voltage that has been output from the converter 31 and the direct-current voltage that has been raised by the boosting unit 33 are supplied to the inverter 32, but only either of them may be supplied thereto. That is, when the electrical power is to be supplied to the compressor 22, only the electrical power from the commercial power source may be input to the inverter 32 while only the electrical power from the solar panel 2 may be input to the inverter 32 when the electrical power is to be supplied to the outlet 3.

The boosting unit 33 is configured to raise the voltage that has been generated by the solar panel 2 and supply it to the inverter 32. The direct-current voltage obtained by the solar panel 2 is, for example, in the order of 10 V. As a result, such that an appropriate voltage can be supplied to the compressor 22 and the outlet 3, the voltage in the order of 10 V generated by the solar panel 2 is raised to a voltage of, for example, 280 V to be supplied to the inverter 32. For example, when a high voltage can be directly obtained from the solar panel by connecting in series a plurality of solar panels or the like, then the boosting unit 33 does not need to be provided.

The switching unit 34, to which the alternating current converted by the inverter 32 is input, is configured to supply the input alternating current to either of the compressor 22 and the outlet 3. The switching unit 34 is controlled by a switching control unit 43 which will be described later and configured to switch the destinations of output of the alternating current. Specifically, when the compressor 22 is being used, the alternating current that has been output from the inverter 32 is supplied via the switching unit 34 to the compressor 22. While the compressor 22 is stopped, the alternating current that has been output from the inverter 32 is supplied via the switching unit 34 to the outlet 3.

The control device 5 is configured to control the inverter 32 and the switching unit 34 in accordance with whether or not the compressor 22 is in operation. Specifically, when the compressor 22 is in operation (hereinafter referred to as "compressor mode"), the control device 5 determines that the compressor mode is entered to control the inverter 32, and controls the switching unit 34 such that the output of the inverter 32 is supplied to the compressor 22. While the compressor 22 is stopped (hereinafter referred to as "outlet mode"), the control device 5 determines that the outlet mode is entered to control the inverter 32, and controls the switching unit 34 such that the output of the inverter 32 is supplied to the outlet 3.

The control device 5 includes, although not shown, for example, a central processing unit (CPU), a memory such as a random access memory (RAM), and a computer-readable storage medium. The process of the series of processing steps for implementing the various functions which will be described later is recorded in the storage medium in the form of a program, and the various functions which will be described later are implemented by the CPU reading this program onto the RAM or the like to carry out information processing and arithmetic processing.

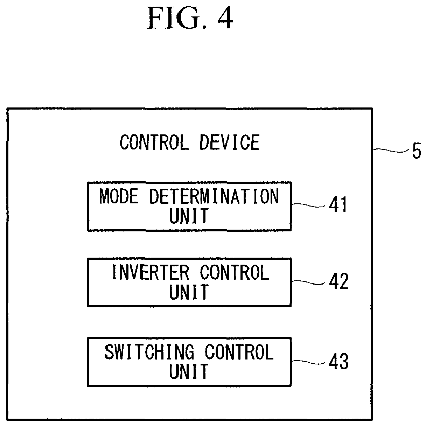

Fig. 4 is a functional block diagram that illustrates the functions of the control device 5. As illustrated in Fig. 4, the control device 5 includes a mode determination unit 41, an inverter control unit 42, and a switching control unit 43.

The mode determination unit 41 is configured to determine whether or not the compressor 22 is in operation, determine either of the compressor mode and the outlet mode as the control mode, and output the control mode that has been determined to the inverter control unit 42 and the switching control unit 43. Specifically, a signal associated with operation and stoppage of the compressor 22 output from a higher-level control device controlling the entire air-conditioning device is input to the mode determination unit 41. On the side of the higher-level control device, for example, a signal associated with operation and stoppage of the air-conditioning device which is performed by the user using the remote controller 9, etc. is input to the higher-level control device and, in order to control the entire air-conditioning device in accordance with this signal, the higher-level control device outputs a signal associated with operation and stoppage of the individual devices (e.g., the compressor 22, the expansion valve 24, etc.) constituting the air-conditioning device. The signal associated with operation and stoppage of the compressor 22 output from the higher-level control device is a signal associated with the operation and stoppage of the compressor 22 among the signals output by the higher-level control device for controlling the entire air-conditioning device, and is a signal output to the mode determination unit 41.

The mode determination unit 41 is configured to determine that the compressor 22 is not in operation when the signal associated with the operation of the compressor 22 (e.g., "1") is not output from the higher-level control device, and select the outlet mode as the control mode. The mode determination unit 41 is also configured to determine that the compressor 22 is in operation when the signal associated with the operation of the compressor 22 (e.g., "1") is output from the higher-level control device, and select the compressor mode as the control mode. In other words, the mode determination unit 41 determines whether or not the compressor 22 is in operation on the basis of whether or not the signal "1" associated with the operation of the compressor 22 is input and, selects either of the compressor mode and the outlet mode as the control mode. The state where the compressor 22 is stopped includes both a case where the user has stopped the air-conditioning device using the remote controller 9, etc. and a case where the air-conditioning device has stopped as a result of occurrence of a blackout, etc. on the side of the commercial power source. In other words, the mode determination unit 41 can determine that the compressor 22 is not in operation not only in a case where the user has intentionally stopped the air-conditioning device (in particular, the compressor 22) but also a case where the air-conditioning device (in particular, the compressor 22) has stopped without the intention of the user due to such as a blackout, and can select the outlet mode as the control mode. different signals may be input to the mode determination unit 41 between a case where the user has stopped the air-conditioning device using the remote controller 9, etc., and a case where the air-conditioning device has stopped due to a blackout, etc. on the side of the commercial power source, and a device may be individually provided which is capable of detecting the blackout.

The inverter control unit 42 is configured to control the inverter 32 in accordance with whether or not the compressor 22 is in operation and change the frequency and the effective value of the alternating-current voltage output from the inverter 32. Specifically, a control mode selected by the mode determination unit 41 is input to the inverter control unit 42. The control mode is the compressor mode indicating that the compressor 22 is in operation and the outlet mode indicating that the compressor 22 is stopped. In other words, the inverter control unit 42 controls the inverter 32 such that the alternating-current voltage has an appropriate voltage and an appropriate frequency depending on whether the alternating current that has been converted by the inverter 32 is supplied to the compressor 22 or supplied to the outlet 3. In other words, the inverter control unit 42 will change the frequency and the effective value of the alternating-current voltage output from the inverter 32 in accordance with the state of switching of the switching unit 34.

For example, when the control mode is the compressor mode, the alternating-current voltage converted by the inverter 32 is controlled such that the voltage is 10 V or more and 150 V or less and the frequency is 15 Hz or more and 120 Hz or less. In the case of the outlet mode, the alternating-current voltage converted by the inverter 32 is controlled such that it becomes equal to that of the commercial power source (voltage of 100 V at frequency of 50 Hz). In this manner, since the appropriate voltage value and the appropriate frequency of the alternating-current voltage vary depending on the destinations of supply of the alternating-current voltage (the compressor 22 or the outlet 3), the inverter control unit 42 controls the inverter 32 such that a desired alternating-current voltage can be obtained. The voltage value and the frequency of the alternating-current voltage supplied to the compressor 22 can be specified as appropriate depending on the types or the like of the compressor 22. The voltage value and the frequency of the alternating-current voltage supplied to the outlet 3 can be specified as appropriate because the commercial power source varies depending on countries and areas.

The switching control unit 43 is configured to control the switching unit 34 in accordance with whether or not the compressor 22 is in operation and switch the destinations of output of the alternating current that has been converted by the inverter 32. Specifically, the control mode that has been determined by the mode determination unit 41 is input to the switching control unit 43. In addition, the switching control unit 43 supplies the alternating current that has been converted by the inverter 32 to either of the compressor 22 and the outlet 3 in accordance with the control mode. That is, the switching control unit 43 supplies the alternating current that has been converted by the inverter 32 to the compressor 22 when the control mode is the compressor mode and supplies the alternating current that has been converted by the inverter 32 to the outlet 3 when the control mode is the outlet mode.

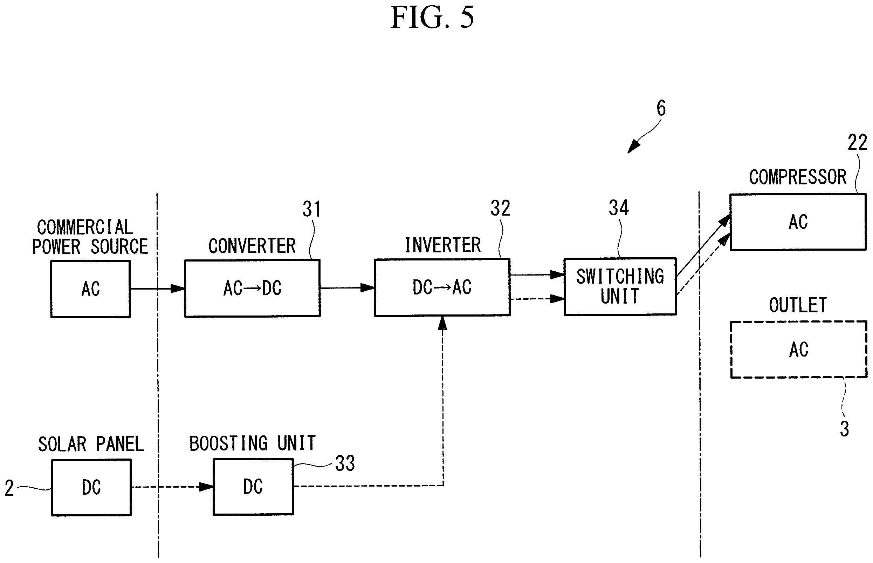

Next, the flow of electrical power supply by the above-described power-source-system-integrating air-conditioning device 1 is described with reference to Fig. 5. The control mode in the flow of Fig. 5 is the compressor mode. Descriptions and illustrations will be given by way of an example where the commercial power source is of an alternating-current voltage (100 V at 50 Hz) and the voltage required in the compressor 22 is the alternating-current voltage (150 V at 120 Hz).

The alternating-current voltage (100 V at 50 Hz) supplied from the commercial power source is supplied to the converter 31. In addition, in the converter 31, the alternating-current voltage (100 V at 50 Hz) is converted into a direct-current voltage (280 V), which is supplied to the inverter 32.

Meanwhile, the direct-current voltage (10 V) generated by the solar panel 2 is supplied to the boosting unit 33. In addition, in the boosting unit 33, the direct-current voltage (10 V) is raised to a direct-current voltage (280 V) and then supplied to the inverter 32.

The direct-current voltage (280 V) output from the converter 31 and the boosting unit 33 is converted by the inverter 32 into an alternating-current voltage (150 V at 120 Hz) to be supplied to the switching unit 34.

The alternating-current voltage (150 V at 120 Hz) that has been output from the inverter 32 is supplied via the switching unit 34 to the compressor 22. The electrical power is supplied to the compressor 22 in this manner and thereby the compressor 22 is driven.

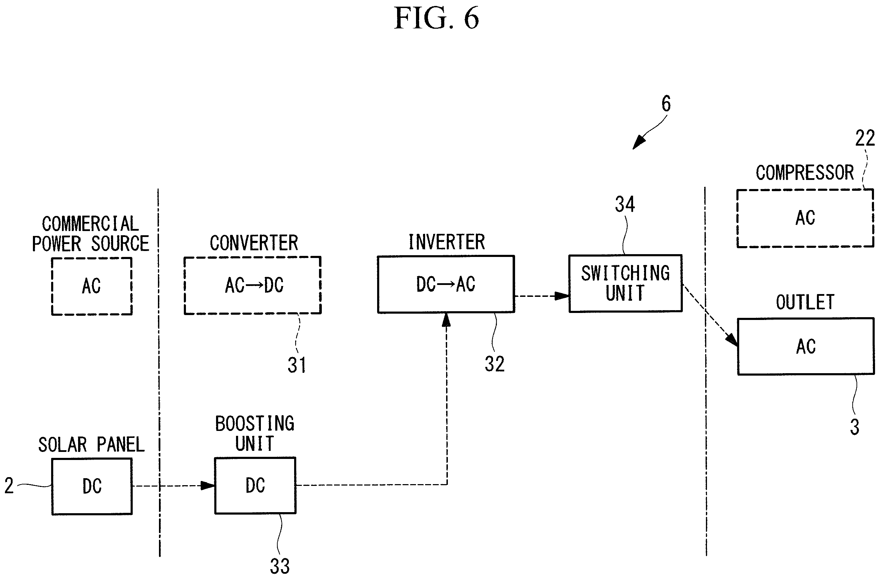

Next, the flow of electrical power supply by the above-described power-source-system-integrating air-conditioning device 1 is described with reference to Fig. 6. The control mode in the flow of Fig. 6 is the outlet mode. Descriptions and illustrations will be given by way of an example where the commercial power source is of an alternating-current voltage (100 V at 50 Hz) and the voltage supplied to the outlet 3 is the alternating-current voltage (100 V at 50 Hz). Since, in a case where the compressor 22 is stopped, it suffices that only the electricity generated by the solar panel 2 is supplied to the outlet 3, it is assumed that no electrical power is supplied from the commercial power source to the inverter 32 in the case of the outlet mode.

The direct-current voltage (10 V) generated by the solar panel 2 is supplied to the boosting unit 33. In addition, in the boosting unit 33, the direct-current voltage (10 V) is raised to a direct-current voltage (280 V) and supplied to the inverter 32.

The direct-current voltage (280 V) that has been output from the boosting unit 33 is converted by the inverter 32 into an alternating-current voltage (100 V at 50 Hz) to be supplied to the switching unit 34.

The alternating-current voltage (100 V at 50 Hz) that has been output from the inverter 32 is supplied via the switching unit 34 to the outlet 3. When the electrical power is supplied to the outlet 3 in this manner, the user is allowed to freely use the electrical power generated by the solar panel 2.

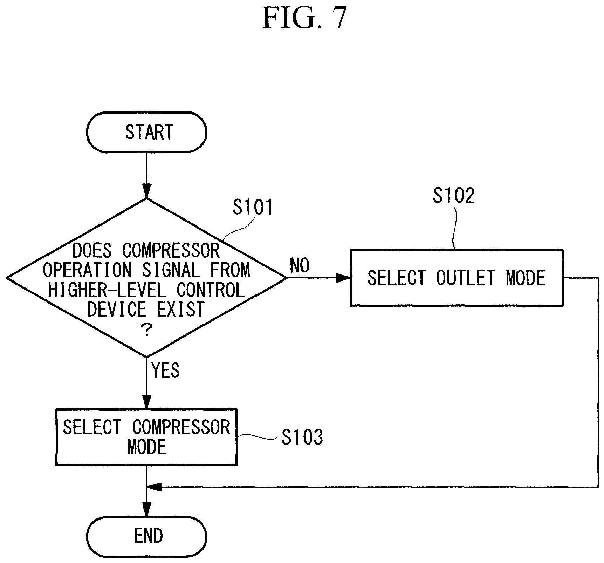

Next, the method for determining the mode by the above-described power-source-system-integrating air-conditioning device 1 is described with reference to Fig. 7. The flow of Fig. 7 is repeatedly carried out at a predetermined control cycle.

The signal from the higher-level control device is referred to and it is determined whether or not the signal associated with the operation of the compressor 22 is output from the higher-level control device (S101). In addition, when the signal associated with the operation of the compressor 22 is not output from the higher-level control device (when a negative ("NO") determination has been made in the step S101), then the outlet mode is selected as the control mode (S102).

When the signal associated with the operation of the compressor 22 is output from the higher-level control device (when an affirmative (YES) determination has been made in the step S101), then the compressor mode is selected as the control mode (S103). The above processing will be repeatedly carried out at a predetermined control cycle.

As has been described in the foregoing, according to the power-source-system-integrating air-conditioning device 1 in accordance with this embodiment, the direct current generated by the solar panel 2 can be converted into an alternating current via the inverter 32 included in the air-conditioning device and the alternating current can be supplied to the outlet 3. As a result, the direct current generated by the solar panel 2 can be converted into an alternating current without the need of using a very costly device, for example, a power conditioner. Since the electrical power can be obtained via the outlet 3 at any time as long as the solar panel 2 can generate electrical power, it can be used as emergency power source, for example, at the time of disaster, etc.

Since an appropriate alternating current can be output from the inverter 32 in accordance with the state of switching of the switching unit 34, it is made possible to cause the devices connected to the compressor 22 or the outlet 3 to operate more appropriately. Since an appropriate alternating current is supplied to the devices connected to the compressor 22 or the outlet 3, erroneous operation, failure, and the like of the devices due to inappropriate electrical power supply can be prevented.

Since the solar panel 2 is provided on the outdoor unit 8, it is possible to carry out the operations associated with installation of the solar panel 2, for example, at the stage of production of the outdoor unit 8. As a result, the production and installation of the device as a whole can be made simple. Since the cabling distance from the solar panel 2 to the inverter 32 can be shortened, the loss in the electrical power can be suppressed.

In the case where the air-conditioning device is operated, the compressor 22 is driven using not only the electrical power from the commercial power source but also the electrical power generated by the solar panel 2, so that the amount of power consumption from the commercial power source can be reduced.

Since it is determined whether or not the compressor 22 is in operation and the electrical power is supplied to the compressor 22 or the outlet 3 on the basis of the result of the determination, it is made possible to create a state where the electricity generated by the solar panel 2 can be used via the outlet 3 while the compressor 22 is not operating. As a result, the electricity generated by the solar panel 2 can be freely used by the user.

The present invention is not limited to the embodiment described above and various modifications can be made thereto without departing from the scope of the invention.

For example, although this embodiment is described in the context of the case where one single outlet 3 is to be provided, it will be appreciated that multiple outlets may be provided. When multiple outlets 3 are to be provided, the shapes of the individual outlets 3 may conform to different standards.

### [Reference Signs List]

- 1: power-source-system-integrating air-conditioning device
- 2: solar panel
- 3: outlet
- 5: control device
- 6: electrical power supply system
- 7: indoor unit
- 8: outdoor unit
- 9: remote controller
- 21: refrigeration cycle
- 22: compressor
- 23: condenser
- 24: expansion valve
- 25: evaporator
- 31: converter
- 32: inverter
- 33: boosting unit
- 34: switching unit
- 41: mode determination unit
- 42: inverter control unit
- 43: switching control unit

## Claims

1. A power-source-system-integrating air-conditioning device comprising:
an air-conditioning device including
a refrigeration cycle configured by interconnecting a compressor, an evaporator, an expansion valve, and a condenser and
an inverter configured to drive the compressor;
an outlet;
a solar panel configured to supply a direct current to the inverter;
a switching unit to which an alternating current obtained by conversion by the inverter is input, the switching unit being configured to supply the alternating current to either of the compressor and the outlet; and
a switching control unit configured to control the switching unit such that the switching unit supplies the alternating current to the outlet when the compressor is stopped.

2. The power-source-system-integrating air-conditioning device according to claim 1, further comprising an inverter control unit configured to change a frequency and an effective value of an alternating-current voltage output from the inverter, the frequency and the effective value being changed in accordance with a state of switching of the switching unit.

3. The power-source-system-integrating air-conditioning device according to claim 1 or 2, wherein the air-conditioning device includes an indoor unit and an outdoor unit, and the solar panel is provided on at least either of an upper surface and a side surface of the outdoor unit.
